# EUROPEAN PATENT SPECIFICATION

(11) **EP 2 821 446 B1**
(45) Date of publication and mention of the grant of the patent: **07.09.2016**
(21) Application number: 14175573.6
(22) Date of filing: 03.07.2014
(51) Int. Cl.: C09D 5/00

(54) **Very low gloss coatings with high resistance to burnishing**
Sehr matte Beschichtungen mit hoher Beständigkeit gegenüber Polieren
Revêtements de très faible brillance avec une haute résistance au brunissage

(30) Priority: 04.07.2013 IT MI20131125
(43) Date of publication of application: 07.01.2015
(73) Proprietor: IVM Chemicals S.r.l., 20123 Milano (IT)
(72) Inventor: Vitale, Marcello, I-20093 COLOGNO MONZESE (MI) (IT); Fogliani, Franco, I-20020 ROBECCHETTO CON INDUNO (MI) (IT); Shah, Nilam, I-20123 Milano (IT)
(74) Representative: De Gregori, Antonella

(56) References cited:
- EP-A1- 1 489 120
- WO-A1-2013/130083
- JP-A- 2003 025 492
- US-A1- 2005 271 881

## Description

The present invention refers to very low gloss coatings with high resistance to burnishing.

### State of the Art

Paints, varnishes and coatings constitute the interface with the environment of a large portion of the items that surround us, and of most wood surfaces. Paints, varnishes or coatings are defined in the context of the present invention as those materials that form a continuous layer around, connected to or interpenetrating a support of some other material, for example a wall, a metal item, a plastic object or, indeed, a wood surface. They are prepared, transported and stored as a liquid able to form a thin layer (1-300 g/square meter of covered surface, more if applied in overlaid coats) on the support when applied with a variety of methods, such as by brush, rag, spray, flow, roll, curtain coat or sponge, also with the aid of electrostatic charge, under pressure or with forced flow of air or inert gases. Alternatively, they can be prepared, transported and stored as a relatively low T_{g} or melting point solid, which is turned into a liquid able to form a thin layer on the substrate at the time of application by suitably increased temperature. Such thin layer subsequently becomes solid by a variety of mechanisms, with the solvent or carrier water, if present, evaporating or being otherwise expelled and the binder molecules reacting with each other to form cross-links and/or intertwining around each other. The present invention does not concern coatings formed by sputtering, chemical vapour deposition, physical vapour deposition or other high-vacuum methods. With this exception, the words "paint", "varnish", "coating", "coating composition" or "coating formulation" are employed as synonyms in the text of the present application.

Wood coatings, in particular, are mainly meant to provide an aesthetic benefit: they enhance the beauty of the wood itself by increasing the contrast between the regions of different density (anfeurung or grain enhancement), make its colour uniform or transform it altogether in the case of coloured or pigmented paints. Therefore, in estimating the durability of a wood coating, it is not sufficient to focus on its ability to provide protection with respect to physical and chemical damage. Even if a paint surface is perfectly sound and continuing to perform its protective function on the underlying substrate, its appearance might change over time in such a way as to decrease the value of the overall object. For example, there could be yellowing due to photochemical or thermal processes, or loss of gloss resulting from microscopic scratches. In the case of matte products, the increase in gloss, or burnish, is equally disagreeable, especially whereas it occurs unevenly as a consequence of a mechanical stress such as rubbing or polishing.

Such unwanted burnishing becomes the more difficult to avoid the lower the gloss (which is measured in gloss units, usually shortened simply in gloss, according to ISO 2813-1994). Indeed, for gloss values measured at 60° angle difference lower than 20 and even more for gloss values lower than 10, it is possible to burnish common wood varnish even simply with fingernail rubbing, in such a way that the uneven gloss is clearly visible from all visual angles. A few strategies have been attempted to overcome this drawback, none of them achieving a completely satisfying result.

Gloss is not a measure of how much light is reflected from a surface but rather of how such light is reflected. Indeed, surfaces reflecting most of the incident light, for example white surfaces, can be of any gloss, including highly glossy or highly matte. The same is true for surfaces reflecting only small fractions of the incident light, such as black surfaces that absorb most incident light, or transparent surfaces that transmit most incident light. They can be of high or low gloss, too, and so can, of course, surfaces of intermediate reflectivity, such as those in which wood is coated with a transparent varnish.

Light can be reflected specularly, that is, mirrorlike; in such a case, reflection follows the rules of Newtonian optics, which dictate that the reflected beam forms with the reflecting surface an angle equal to that formed by the incident beam. Or, light can be scattered, that is reflected according to a statistical distribution of angles. The greater the fraction of total reflected light that is reflected specularly, the higher the gloss. Conversely, a surface with very low gloss scatters most of the reflected light. Gloss-reducing scatter is due to interaction of light with micro- and nano-sized features of the surface. Such features are commonly obtained in paint by the presence of particles of appropriate size, usually between a few to a few tens of micrometers. Such micrometric materials, called matting agents, must also possess other properties in order to be useful in wood paint. Firstly, they must not sink rapidly in the liquid paint, settling in the storage tanks or cans in such a way as to be difficult to stir back homogeneously, or positioning mostly too far below the front surface when the paint is drying and forming the final solid film. Moreover, they must not absorb light or scatter it once such light has entered the coating layer. If they did that, the coating would no longer be transparent. In order to fulfil this latter condition, the matting agents must possess an optical refraction index identical or very close to the film-forming material, i.e. those components of the paint that form the large majority of the solid dry film, that is mostly the binder. If such condition is respected, the scatter happens only at the interface between the solid dry film and air, reducing gloss. Otherwise, there will also be scatter at all the many interfaces between binder and matting agent, leading to a whitish, non-transparent appearance of the overall film.

Good matting agents include microparticles of silica (silicon oxide), organic polymers or ceramic materials. It appears also well established that the maximum matting power, that is the greatest decrease in gloss per unit weight of the matting material, is obtained when the particles are rough-shaped and present sharp angles, rather than being smooth, regular or spherical. The lowest gloss values, less than about 20, can only be obtained with very rough surfaces, in which the matting particles are present at the surface in large quantity. In such conditions, the surface itself becomes very fragile on a microscopic level: even if the polymeric network is not easily scratched or eroded, it becomes much easier to
1. move or remove the matting particles, or
2. to press them further below the surface, or
3. to break their most external edges and points
all processes that result in a flatter surface area of higher gloss. Furthermore, the surface may become rather porous and subject to easy staining from absorption and retention of liquids or powders.

Some products partially obviate to this problem by using a very dense binder network, which makes processes 1) and 2) more difficult, although not impossible. For example, US8354460 describes a tightly woven automotive enamel including inorganic nano and microparticles additionally functionalized and crosslinked to the polymeric network. However, in the state of the art, such coatings present characteristics that make them unsuitable for wood coatings: in particular, either an excessively "plastic" appearance, where the natural wood look is lost, or notably poor homogeneity in the distribution of the matting agent resulting in uneven gloss of the new coating. Other unwanted characteristics are lack of slip to the touch, since the mobile molecules (oils and silicones) required for this effect cannot pass the tightly woven surface, and a notable tactile roughness. Finally, the great rigidity makes such coatings unable to follow the wood substrate as it naturally expands and shrinks in response to environmental changes in temperature and humidity, leading to loss of adhesion, crack formation and other defects over time.

Other products follow a completely different approach, trying to solve the afforded technical problem, employing as matting agents some waxes that produce loss of gloss by micro-incompatibility with the binder. In such a case, the coating surface does not have much mechanical resistance, since it is made of separate microregions of binder and wax, and often the layers are very thin. These coatings, which tend to seem almost not to be present on the wood (a very "lean" look) are initially resistant to burnishing, because the soft surface "self-heals" when rubbed, the wax fragmenting back in random patterns relative to the binder. However, such resistance is only temporary, since the wax gets consumed chemically and mechanically over time. After the wax content is sufficiently reduced, an overall and uneven increase in gloss can be observed just as if no wax had been present.

The recent patent literature describes a number of other possible technologies, all with shortcomings as it concerns their application to the wood coating field. WO9906461 teaches a matte powder coating for plastic materials, using blocked polyisocyanates, which requires temperatures of over 100°C in order to be activated, temperatures that are not compatible with wood substrates. US2013030106 shows a matte transparent finish for automotive characterized by combining a silica matting agent with talc. However, the claimed increase in mechanical resistance is clearly insufficient at the lowest gloss achievable within their range of component concentrations, about 20. WO2011146123 teaches how to obtain a very low gloss UV-curable composition (an excellent result in itself), but does not claim any improvement in burnish resistance over the state of the art. WO2008127767 describes coating compositions achieving medium gloss and a small degree of burnish resistance by the use of fluoropolymer binders in thin-layer applications. US7439299 presents low gloss waterborne coatings obtained using as binders dispersions of specific polyurethane copolymers, but does not claim improved burnish resistance over the art.

Very low gloss values in combination with the best mechanical resistance performance are currently obtained most conveniently using paint systems comprising a volatile component, which ensures a volume decrease in going from liquid paint to dry paint, a cross-linkable binder, and a chemical cross-linking mechanism, in the presence of efficient matting agents. For wood coatings, in particular, most very low gloss finishes are obtained using the so called polyurethane paints (originally described, in a general sense, in Bayer's patents from the 1950's, such as GB737385 and US2897166), that is polyisocyanate-crosslinked polyols, usually polyester, polyurethane or polyacrylic polyols. For example, US2012107618 discloses such a formulation including urethane polyols, but it is limited to gloss values of over 20, measured at an angle difference of 60°. US6878771 teaches moisture-curing low gloss polyurethane pigmented formulations including tertiary amine catalysts, a kind of composition which is known to be difficult to control in industrial applications. Another example of such a strategy for an application where coating rigidity or final aesthetics are not a problem is described in JP2003025492 for a steel protection coating, applied on steel surface when such steel is produced. In such document, the main goal is to form a coating that has very low water (liquid or vapour) permeability and that also possesses the ability to bind metal sites where oxidation is starting, thus avoiding the formation of connected oxide-hydroxide links which are determinant for corrosion spreading. In order to achieve this dual objective, it was found to be effective the formation of a hybrid organic/inorganic network including, for example, nanomeric (such as Aerosil type fuming silica) or colloidal silica and an organic component with silane, siloxane, amine or thiol binding groups, interpenetrating the regular polymeric binder. Such network can be effectively formed only thanks to a high temperature curing, something unavoidable for the application of a coating to hot steel, but impossible to replicate in wood coatings.

In the same vein, WO2013130083 teaches a composition used as a protective coating for ELP charge transfer rollers, comprising an aliphatic polycarbonate polyol and an aromatic polyisocyanate, or a polyisocynate in which the aromatic polyisocyanate is at least 50% of total polyisocyanate (page 4, lines 23-27 of WO'083), and silica matting agents, in addition to other components such as conductive agents. In such composition, the NCO/OH ratio is no larger than 1,5 (page 5, line 33 of WO'083) and the coating is cured at a temperature higher than 70°C for at least 30 hours, again it is disclosed a procedure highly impractical for wood coatings. Such composition certainly shows a great scratch resistance and the ability to hold tightly great amounts of other additives, while at the same time being impervious to contamination from the toner that might be passed over from the printing roller. However, it is also extremely rigid and has no resistance to burnish, which is fine for the intended application which is purely functional without any aesthetic necessity.

Further, US2005/271881 teaches low gloss compositions including any NCO-terminated polyurethane prepolymer cured with amines of various molecular weights as abrasion-resistant coatings. Although the abrasion resistance obtained appears significant, no teaching is present about scratch or burnish resistance, the goal of the document being a coating which protects the substrate from pitting. All examples include TDI-only-based polyurethane prepolymers. The overall system is likely to be microscopically rigid even while showing a significant bulk stretchability.

Polyurethane prepolymers partially cured with amines are also described in EP 1489120, as part of a radiation-curable coating with soft touch properties. Isocyanates are added to unsaturated acrylic polyester polyols and a variety of other reactive polymers in one step, to form NCO-terminated polyurethane prepolymers, then reacted with amines to become larger and more branched. Then the coating is cured with UV radiation. The ratio aromatic/aliphatic polyisocyanates is never mentioned.

This coating ensures a degree of chemical resistance, always a problem for soft touch products, however nothing is said about gloss and scratch or burnish resistance of the coating.

The present invention presents a great improvement in the performance achievable in such systems as concerns the resistance to burnish, solving all of the problems described above.

A first aim of the present invention is that of individuating paint formulations able to provide surfaces with very low gloss highly resistant to burnish.

A further aim is that of individuating paint formulations able to provide surfaces with a very attractive look and pleasant feel to the touch, and without affecting unduly any other characteristic of the paint such as in-can stability, viscosity, drying speed, elasticity, toughness, chemical resistance and so on.

### Detailed description of the invention

The present invention relates to a coating composition for a substrate comprising a cellulosic material or wood comprising
a. a substantially saturated aliphatic and linear polyester polyol binder with OH% comprised within 0.5 and 3,
b. one or more silica microparticles matting agents, having an average equivalent diameter varying between 1 and 20 microns;
c. a mixture of aromatic and aliphatic polyisocyanates and/or mixed polyisocyanates composed of aromatic and aliphatic units, such aromatic and aliphatic polyisocyanates and/or units being used in a numeric ratio of their respective reactive isocyanate groups comprised between 1:5 and 4:5, most preferably between 3:10 and 6:10, with the total number of reactive isocyanate groups being equal to between 1.8 and 4 times the number of hydroxyl groups in the coating composition, most preferably between 2 and 3.5 times.

That is the total number of reactive isocyanate groups being equal to between 1,8 and 4 times the stoichiometric ratio for the isocyanate-hydroxyl reaction.

Surprisingly, the coating composition according to the present invention solves the above indicated technical problem by the combination of specific binders and crosslinkers in a relatively narrow range of highly unusual ratios, in the presence of a silica microparticles matting agent. When such components are combined in ratios outside such range, the coatings produced fail to fulfil the expected performance requirement in one or more aspects, and are unsuitable for industrial applications, in particular as practiced in the wood coating industry.

The present invention concerns also the use of said coating composition as a coating applied to a substrate comprising a cellulosic material or wood and the method of preparation of a coating based on said coating compositions, comprising:
i) the coating composition is applied to a substrate; and
ii) the coating composition films or coalesces to form a substantially continuous film, and crosslinks by reaction of isocyanate groups with hydroxyl groups.

A further object of the present invention is a Kit comprising said coating compositions, wherein components a), b) and possible other components different from c) constitutes a first element A of the kit, while component c) constitutes a second element B of the kit, the two elements A and B being mixed just at the moment of using the coating composition.

The component a) of the coating composition according to the present invention consists of polyester polyols that are substantially aliphatic, that is aromatic components comprise less than 2 % in weight of the polyester; such polyester polyol are also substantially saturated, that is their composing C atoms are substantially all bound by single bonds: less than 0.1% of the C-C bonds are reactive C-C double or triple bonds. They are substantially linear, that is their composing monomers are substantially all monovalent or divalent and join substantially all head-to-tail to form a simple chain, without branching. Less than 1% of the composing monomers are trivalent or of higher functionality. Moreover, they have OH%, defined as the weight of OH groups in 100 g of polymer, comprised between 0.5 and 3, most preferably between 1 and 2. Possible composing monomers include, for example, linear or cyclic diacids with a number of carbon atoms comprised between 1 and 18, most preferably between 2 and 10, linear or cyclic glycols with a number of carbon atoms between 1 and 18, most preferably between 2 and 12, and glycol ethers with a number of ether groups between 1 and 10, most preferably between 1 and 5, and length of the carbon chains from oxygen to oxygen between C1 and C12, most preferably between C2 and C6. The component monomers may bear other reactive groups such as carboxyl, amines, acryls and so on. Particularly preferred monomers are linear diacids with a number of carbon atoms comprised between 6 and 8 and a glycol ether with one ether group.

The polyester polyol of the invention can conveniently constitute between 50 % and 95%, and most conveniently between 70% and 90% in weight of the total dry weight of the coating composition, excluding from such total the weight of the silica matting agent and the weight of the polyisocyanates. The remaining fraction can comprise, for example, other binders or polymers, which can be polyols able to react with isocyanate, non reactive, or possessing other crosslinking capability such as by reaction with water, oxygen or crosslinking agents other than polyisocyanates, or by photoinitiated cationic or radicalic crosslinking. Such other binders or polymers can be by their chemical nature acrylates, methacrylates, vinyls, urethanes, ureas, alkyds, esters, ethers, silicones, phosphates, aminoacids or amides, fluorinated compounds, under the guise of molecules or polymers of any molecular weight, copolymers combining any of the above or a mixture of any of the above, among others.

The component b) of the coating composition according to the present invention consists of one or more silica microparticles matting agents which can be made, for instance, of thermal, fumed, pyrogenic, sol-gel or precipitated silica. The particles can be porous or non-porous, with an untreated surface or functionalized or coated with any number of materials, such as waxes, hydrocarbons, polyolefins, silicones, silanes or siloxanes, as known in the art. The particles can be of regular or irregular shape, and their average equivalent diameter varies between 1 and 20 microns. Their pH can be between 4 and 10. Combinations of more than one such matting agents can be used. The matting agents can conveniently constitute between 0.5% and 20% of the dry weight of the coating composition and most conveniently between 2% and 20%. The surface gloss measured at 60° angle difference varies between 0 and 40, preferably between 0 and 20. The selection of the specific matting agents to use in each particular formulation is driven, as known in the art, by the target gloss, interaction with other formulation components and coating thickness both wet and after drying.

The component c) of the coating composition according to the present invention consists of aromatic polyisocyanates which can be made, among other monomers, from toluene diisocyanate (TDI), from diphenylmethylene diisocyanate (MDI) or combinations thereof. The aliphatic polyisocyanates can be made, among others monomers, from hexamethylene diisocyanate (HDI), from isophorone d-isocyanate (IPDI) or combinations thereof. Mixed polyisocyanates can be composed of aromatic and aliphatic fragments chosen, among others, from those listed above. All of them can be dimers, trimers, tetramers, pentamers or of higher dimensionality, even polymeric, and can include components with blocked isocyanate groups.

In these types of coating compositions, the polyisocyanates and polyols are usually combined only at the time of application, since they react rapidly and a complete composition comprising all constituents could not be conveniently stored, with the sole exception of those embodiments using blocked polyisocyanates. Therefore, in most embodiments, the components of the coating composition according to the present invention, excluding polyisocyanates, form a part A whereas the polyisocyanates are included in a part B along with, eventually, other components which do not react with isocyanates. Either or both part A and part B, and therefore the overall coating composition, may additionally include one or more of the aromatic or aliphatic organic solvents, water, coalescents, pigments, colorants, organic or inorganic fillers, dispersants, surface-active agents, organic or inorganic matting agents, rheology modifiers, catalysts, stabilizers, silicones, waxes, polymer particles, UV absorbers and any other additive employed in the art. The addition of silicones which confer good slip properties to the surface, and especially of reactive silicones which are able to crosslink to one or more of the coating binders and/or the polyisocyanates, is particularly advantageous.

The coating compositions of the invention can be either solvent-borne or waterborne. In the former case, possible solvents include benzene, toluene, xylene and any other aromatic solvents, ethyl acetate, propyl acetate, butyl acetate, isobutyl acetate and any other acetates, acetone, methyl ethyl ketone and any other ketones, ethanol, propanol, isopropanol and any other alcohol, any glycol and glycol ether and any other solvent used in the art, In the waterborne case, the polyester polyols of the invention are most conveniently prepared as or transformed in an emulsion in water. Emulsification can be achieved by way of emulsifying groups which can be part of the polyester polyol chain or separate compounds (ions, salts, molecules or polymers) or a combination thereof. Examples of emulsifying groups include polyethers and modified polyethers, fatty acids and their salts, phospholipids, alkyl sulphates or phosphates and so on. Further modifications can be imparted to the emulsified polyester, for example by urethanization, as known in the art. Waterborne compositions can additionally include any cosolvent or coalescent known in the art. The coating compositions of the invention are prepared, transported and stored as a low-viscosity liquid able to form a thin layer (5-200 g/square meter of covered surface, more if applied in overlaid coats) on the support when applied with a variety of methods, such as by brush, rag, spray, flow, roll, curtain coat or sponge, also with the aid of electrostatic charge, under-pressure or forced flow of air or inert gases. In particular, the coating composition of the invention can be applied on bare, stained or previously coated substrates, in a single layer or in several layers. Eventual underlying coats can be of any coating technology known in the art such as waterborne, solventborne, 100% (solventless), liquid, from solids or from vapours.

Drying of the applied coating is carried out, as usual for wood coatings, at temperatures lower than 70°C, often at room temperature.

A great advantage of the coatings of the present is in that they show superior resistance to burnishing even at extremely low gloss, coupled with great scratch resistance, without compromising either the visual or tactile qualities of the finish or those characteristics that make the coating formulation suitable for industrial application.

### Examples

According to the usual practice in the art, the coating compositions in the examples are all made up of a first component (part A) containing binders, solvents (including water), matting agents, other solids, surface-active or rheology-modifying agents, emulsifying agents (in waterborne formulations), catalysts and so on, of a second component (part B) comprising crosslinking agents which may be also diluted with solvents, and, eventually, of a third component consisting of a diluent mix (part C) used to tune the viscosity to fit the application mode on the substrate. In the tables, component concentrations are always given as parts by weight. The following binders were used in the examples

**Table I - characteristics of example binders**

| | OH% | Average MW | nature |
|---|---|---|---|
| Typical polyester polyol | 4.5 | 5000 | Branched, with some aromatic components |
| Invention polyester polyol | 1.6 | 1900 | Linear with substantially only aliphatic saturated components |

More precisely, the typical polyester polyol employed here is composed of six parts of phthalic anhydride, four parts of trimethylol propane, three parts of fatty acids from coconut oil and one part of propyl glycol, by weight. In contrast, the invention polyester polyol is composed of adipic acid and diethylene glycol in proportions of 1.35:1 by weight.

Inventive Example 1 - A solventborne first component, 1A, containing a low-hydroxyl-number, linear polyester polyol according to the present invention as defined in Table I, was prepared as reported in Table II.

**Table II - solventborne first component formulation 1A**

| | |
|---|---|
| Invention polyester polyol | 25 |
| Methyl ethyl ketone | 18 |
| Isobutyl acetate | 18 |
| Butyl acetate | 25 |
| Methoxy propyl acetate | 7.3 |
| Filming agent* | 3 |
| Silica matting agent** | 2.5 |
| Reactive silicone | 1 |
| Rheological agent | 0.1 |
| Dibutyil tin dilaurate | 0.1 |

| | |
|---|---|
| * non-reactive, linear polyurethane resin based on MDI ** the silica matting agent is a treated pyrogenic silica with D50 = 9.5 microns | |

A second component 1B was also prepared, comprised of diluted polyisocyanate crosslinkers according to the formulation reported in Table III.

**Table III - solventborne second component formulation 1B**

| | | |
|---|---|---|
| Mixed TDI-HDI | 3:2 | |
| polyisocyanate | | 30 |
| HDI-based isocyanurate | | 33 |
| Butyl acetate | | 32 |
| Ethyl acetate | | 5 |

Finally, a diluent mix 1C was prepared according to the formulation of Table IV.

**Table IV - solventborne diluent 1C**

| | |
|---|---|
| Methyl isobutyl ketone | 55 |
| Methoxypropanol acetate | 35 |
| Isobutyl acetate | 10 |

100 parts of 1A were combined with 20 parts of 1B and 30 parts of 1C, thereby obtaining Example Composition 1. The total reactive isocyanate groups content was 2.5 times the stoichiometric ratio with reactive hydroxyl groups. The ratio of aromatic to aliphatic isocyanate groups was 2:5.

Comparative Example 2 - A second component 2B was prepared, comprised of diluted polyisocyanate crosslinkers, according to the formulation reported in table V.

**Table V - solventborne second component formulation 2B**

| | |
|---|---|
| HDI-based isocyanurate | 57 |
| Butyl acetate | 37 |
| Ethyl acetate | 6 |

100 parts of 1A were combined with 20 parts of 2B and 30 parts of 1C, thereby obtaining Example Composition 2. The ratio of reactive isocyanate group to reactive hydroxyl groups in Example Composition 2 was 2.5, equal to that in Example Composition 1. The ratio of aromatic to aliphatic isocyanate groups was 0:1, that is only aliphatic isocyanates were present.

Comparative Example 3 - A second component 3B was prepared, comprised of diluted polyisocyanate crosslinkers, according to the formulation reported in table VI.

**Table VI - solventborne second component formulation 3B**

| | | |
|---|---|---|
| Mixed TDI-HDI | 3:2 | |
| polyisocyanate | | 47 |
| Butyl acetate | | 46 |
| Ethyl acetate | | 7 |

100 parts of 1A were combined with 30 parts of 3B and 20 parts of 1C, thereby obtaining Example Composition 3. The ratio of reactive isocyanate group to reactive hydroxyl groups in Example Composition 3 was 2.5, equal to that in Example Compositions 1 and 2. The ratio of aromatic to aliphatic isocyanate groups was equal to that in the mixed TDI-HDI polyisocyanate, that is 3:2.

Comparative Example 4 - 100 parts of 1A were combined with 10 parts of 1B and 30 parts of 1C, thereby obtaining Example Composition 4. The total reactive isocyanate groups content was 1.25 times the stoichiometric ratio with reactive hydroxyl groups. The ratio of aromatic to aliphatic isocyanate groups was 2:5 as in Example Composition 1.

Comparative Example 5 - A solventborne first component, 5A, containing a high-hydroxyl-number, typical polyester polyol, was prepared as reported in Table VII

**Table VII - solventborne first component formulation 5A**

| | |
|---|---|
| Typical polyester polyol | 25 |
| Methyl ethyl ketone | 18 |
| Isobutyl acetate | 18 |
| Butyl acetate | 25 |
| Methoxy propyl acetate | 7.3 |
| Filming agent* | 3 |
| Silica matting agent** | 2.5 |
| Reactive silicone | 1 |
| Rheological agent | 0.1 |
| Dibutyil tin dilaurate | 0.1 |

| | |
|---|---|
| * non-reactive, linear polyurethane resin based on MDI ** the silica matting agent is a treated pyrogenic silica with D50 = 9,5 microns | |

Therefore, 5A is identical to 1A except for the polyester polyol employed.

100 parts of 5A were combined with 20 parts of 1B and 30 parts of 1C, thereby obtaining Example Composition 5. The total reactive isocyanate groups content was 1.2 times the stoichiometric ratio with reactive hydroxyl groups. The ratio of aromatic to aliphatic isocyanate groups was 2:5 as in Example Compositions 1 and 4.

Inventive Example 6 - 100 parts of 1A were combined with 28 parts of 1B and 30 parts of 1C, thereby obtaining Example Composition 6. The total reactive isocyanate groups content was 3.5 times the stoichiometric ratio with reactive hydroxyl groups. The ratio of aromatic to aliphatic isocyanate groups was 2:5 as in Example Compositions 1, 4 and 5.

Inventive Example 7 - A second component 7B was also prepared, comprised of diluted polyisocyanate crosslinkers according to the formulation reported in Table VIII.

**Table VIII - solventborne second component formulation 7B**

| | | |
|---|---|---|
| Mixed TDI-HDI | 3:2 | |
| polyisocyanate | | 40 |
| HDI-based isocyanurate | | 24 |
| Butyl acetate | | 31 |
| Ethyl acetate | | 5 |

100 parts of 1A were combined with 20 parts of 7B and 30 parts of 1C, thereby obtaining Example Composition 7. The total reactive isocyanate groups content was 2.5 times the stoichiometric ratio with reactive hydroxyl groups, equal to that in Example Compositions 1, 2 and 3. The ratio of aromatic to aliphatic isocyanate groups was 3:5.

### Testing of solventborne Example Compositions:

An aliquot of each Example Composition from 1 to 7 was used to spray paint several standard wood panels, over a polyester bottom coat, depositing 120 g/m² of the wet paint. The samples so obtained were tested at room temperature (RT) and ambient humidity to measure the time required to reach dust-free and dry-hard state according to the standards set in ASTM D 1640. Gloss, measured at 60° angle difference after at least 24 hrs, ranged between 3 and 5.

After allowing a minimum of 15 days at T=25°C and RH=50% in order to ensure complete drying, filming and cross-linking, the samples also underwent tests for surface scratch resistance, according to UNI 9428-1989, and for resistance to cold liquids, specifically to red wine, according to EN 12720-2009. Finally, since no standard method exists (to our knowledge) to test for resistance to burnishing of coated wood surfaces, a method was set up adapting the old scoring method UNI 9395-1989. We used the tool for that method, that is Elcometer 3092 Sclerometer Hardness Tester, a springloaded ball pen moved while held perpendicularly to the surface, but measured the minimum force (in newtons, N) required to produce any visible sign on the surface, rather than a score or indentation. The results of all tests are collected below in Table IX.

**Table IX: results of tests carried out on Example Compositions spray-painted on wooden panels**

| | Dust-free time (min) | Dry-hard time (hrs) | Scratch resistance (N) | Red wine resistance | Burnish resistance (N) |
|---|---|---|---|---|---|
| Inventive example 1 | 45 | 2 | 1.5 | 4 | 10 |
| Comparative example 2 | 120 | 24 | 1.5 | 1 | 10 |
| Comparative example 3 | 30 | 1.5 | 0.4 | 4 | 0.8 |
| Comparative example 4 | 35 | 1.5 | 0.2 | 1 | 0.5 |
| Comparative example 5 | 30 | 1 | 0.5 | 5 | 0.1 |
| Inventive example 6 | 55 | 2,5 | 1.6 | 4 | 8 |
| Inventive example 7 | 40 | 1.75 | 1.2 | 5 | 6 |

Inventive Examples 1, 6 and 7 perform exceptionally in burnish resistance and scratch resistance while keeping sufficiently rapid drying times to be industrially applicable. By contrast, Comparative Example 2, which has a ratio of aromatic to aliphatic isocyanate groups outside the inventive range, although showing equally outstanding scratch and burnish resistance, dries too slowly for modern industrial applications. Moreover, it presents too little resistance to some cold liquids (such as red wine, as shown) to be accepted for use on most objects. Comparative Examples 3, 4 and 5, presenting a ratio of aromatic to aliphatic isocyanates or a ratio of reactive isocyanate groups and reactive hydroxide groups outside the inventive ranges, or using a polyester polyol not corresponding to the inventive parameters, all fail to improve on the state of the art in burnish and scratch resistance.

## Claims

1. A coating composition for a substrate comprising a cellulosic material or wood comprising:
a) a substantially saturated aliphatic and linear polyester polyol binder with OH% comprised within 0.5 and 3,
b) one or more silica microparticles matting agents, having an average equivalent diameter varying between 1 and 20 microns;
c) a mixture of aromatic and aliphatic polyisocyanates and/or mixed polyisocyanates composed of aromatic and aliphatic units, such aromatic and aliphatic polyisocyanates and/or units being used in a numeric ratio of their respective reactive isocyanate groups comprised between 1:5 and 4:5, most preferably between 3:10 and 6:10,
with the total number of reactive isocyanate groups being equal to between 1.8 and 4 times the number of hydroxyl groups in the coating composition, most preferably between 2 and 3.5 times.

2. A coating composition as in claim 1, wherein the polyester polyol is present in an amount ranging from 50% to 95%, preferably from 70 to 90% by weight, with respect to the total dry weight of the coating composition, excluding from such total dry weight the weight of the silica matting agent and the weight of the polyisocyanates.

3. A coating composition according to any of the preceding claims, wherein the polyol polyester is formed by linear diacids having a number of carbon atom ranging from 6 to 8 and from a glycol ether having one ether group.

4. A coating composition according to any of the preceding claims, wherein the component b) is one or more silica matting agents selected from thermal, fumed, pyrogenic, sol-gel or precipitated silica, in an amount ranging from 0.5% to 20% by weight of the total dry weight of the coating.

5. A coating composition according to any of the preceding claims, wherein the polyisocyanates are constituted by or include oligomers comprising both aromatic and aliphatic isocyanate monomers.

6. A coating composition according to any of the preceding claims, additionally including volatile components such as organic solvents, cosolvents, coalescents or water, such volatile components being present in an amount ranging from 5% to 90% of the total weight of the coating composition.

7. A coating composition according to claim 6, wherein water is present in an amount ranging from 10% to 80 % of the total weight of the coating composition.

8. A coating composition according to any of the preceding claims, additionally including one or more of the other crosslinking or non-crosslinking binders or polymers, pigments, colorants, organic or inorganic fillers, dispersants, surface-active agents, organic or inorganic matting agents, rheology modifiers, catalysts, stabilizers, silicones, waxes, polymer particles, UV absorbers and possible other additives.

9. A coating composition according to any of the preceding claims, additionally including at least one surface tension modulating agent, preferably at least one silicone surface tension modulating agent, more preferably at least one silicone surface tension modulating agent which can crosslink with other components of the coating composition.

10. Use of a coating composition according to any of the preceding claims, as a coating applied to a substrate comprising a cellulosic material or wood.

11. A method of preparation of a coating based on the coating compositions according to claims 1 through 9, comprising:
i) the coating composition is applied to a substrate; and
ii) the coating composition films or coalesces to form a substantially continuous film, and crosslinks by reaction of isocyanate groups with hydroxyl groups.

12. Kit comprising the coating compositions according to any of the claims from 1 through 9, wherein components a), b) and possible other components different from c) constitutes a first element A of the kit, while component c) constitutes a second element B of the kit, the two elements A and B being mixed just at the moment of using the coating composition.

## Patentansprüche

1. Eine Beschichtungszusammensetzung für einen Untergrund, der zellulosehaltiges Material oder Holz umfasst, umfassend:
a) ein im Wesentlichen gesättigtes aliphatisches und lineares Polyesterpolyol-Bindemittel mit OH% innerhalb 0,5 und 3,
b) ein oder mehrere Mattierungsmittel mit Siliziumdioxid-Mikropartikeln, das bzw. die einen durchschnittlichen äquivalenten Durchmesser aufweist bzw. aufweisen, der zwischen 1 und 20 Mikrometern variiert;
c) eine Mischung aus aromatischen und aliphatischen Polyisocyanaten und/oder gemischten Polyisocyanaten, die aus aromatischen und aliphatischen Einheiten bestehen, diese aromatischen und aliphatischen Polyisocyanate und/oder Einheiten werden in einem numerischen Verhältnis ihrer jeweiligen reaktiven Isocyanatgruppen, die zwischen 1:5 und 4:5 umfassen, bevorzugt zwischen 3:10 und 6:10, verwendet,
wobei die Gesamtanzahl der reaktiven Isocyanatgruppen zwischen 1,8 und 4 Mal der Anzahl der Hydroxylgruppen in der Beschichtungszusammensetzung entspricht, vorzugsweise zwischen 2 und 3,5 Mal.

2. Eine Beschichtungszusammensetzung nach Anspruch 1, **dadurch gekennzeichnet, dass** das Polyesterpolyol hinsichtlich des gesamten Trockengewichts der Beschichtungszusammensetzung in einer Gewichtsmenge zwischen 50 % und 95 % vorliegt, vorzugsweise zwischen 70 und 90 %, wobei bei diesem gesamten Trockengewicht das Gewicht des Siliziumdioxid-Mattierungsmittels und das Gewicht der Polyisocyanate ausgenommen ist.

3. Eine Beschichtungszusammensetzung nach einem der vorhergehenden Ansprüche, **dadurch gekennzeichnet, dass** das Polyolpolyester durch lineare Dicarbonsäuren geformt wird, die zwischen 6 und 8 Kohlenstoffatome aufweisen, und von einem Glycolether, der eine Ethergruppe aufweisen.

4. Eine Beschichtungszusammensetzung nach einem der vorhergehenden Ansprüche, **dadurch gekennzeichnet, dass** Bestandteil b) ein oder mehrere Siliziumdioxid-Mattierungsmittel ist, das bzw. die aus thermischem, geglühtem, pyrogenem, Sol-Gel- oder gefälltem Siliziumdioxid ausgewählt wurde bzw. wurden, in einer Gewichtsmenge, die zwischen 0,5 % und 20 % des gesamten Trockengewichts der Beschichtung ausmacht.

5. Eine Beschichtungszusammensetzung nach einem der vorhergehenden Ansprüche, **dadurch gekennzeichnet, dass** die Polyisocyanate durch Oligomere gebildet werden oder Oligomere enthalten, die sowohl aromatische als auch aliphatische Isocyanatmonomere umfassen.

6. Eine Beschichtungszusammensetzung nach einem der vorhergehenden Ansprüche, die zusätzlich flüchtige Bestandteile beinhaltet, beispielsweise organische Lösungsmittel, Co-Lösungsmittel, Koaleszenzmittel oder Wasser, diese flüchtigen Bestandteile liegen in einer Menge vor, die zwischen 5 % und 90 % des Gesamtgewichts der Beschichtungszusammensetzung ausmacht.

7. Eine Beschichtungszusammensetzung nach Anspruch 6, **dadurch gekennzeichnet, dass** Wasser in einer Menge vorliegt, die zwischen 10 % und 80 % des Gesamtgewichts der Beschichtungszusammensetzung ausmacht.

8. Eine Beschichtungszusammensetzung nach einem der vorhergehenden Ansprüche, die zusätzlich eines oder mehrere der folgenden Mittel beinhaltet: andere vernetzende oder nicht-vernetzende Bindemittel oder Polymere, Pigmente, Farbmittel, organische oder anorganische Füllstoffe, Dispergiermittel, grenzflächenaktiven Stoffe, organische oder anorganische Mattierungsmittel, Rheologie-Modifzierer, Katalysatoren, Stabilisatoren, Silikone, Wachse, Polymerpartikel, UV-Absorber und mögliche andere Additive.

9. Eine Beschichtungszusammensetzung nach einem der vorhergehenden Ansprüche, die zusätzlich mindestens ein Oberflächenspannung-Modulationsmittel beinhaltet, vorzugsweise mindestens ein Oberflächenspannung-Modulationsmittel für Silikone, besser noch mindestens ein Oberflächenspannung-Modulationsmittel für Silikone, das mit anderen Bestandteilen der Beschichtungszusammensetzung vernetzen kann.

10. Verwendung einer Beschichtungszusammensetzung nach einem der vorhergehenden Ansprüche als Beschichtung, die auf einen Untergrund aufgetragen wird, der zellulosehaltiges Material oder Holz umfasst.

11. Ein Verfahren zur Herstellung einer Beschichtung, basierend auf der Beschichtungszusammensetzung nach den Ansprüchen 1 bis 9, umfassend:
i) Die Beschichtung wird auf einen Untergrund aufgetragen; und
ii) die Beschichtungszusammensetzung verfilmt oder koalesziert, um einen im Wesentlichen kontinuierlichen Film zu bilden, und verbindet sich durch eine Reaktion von Isocyanatgruppen mit Hydroxylgruppen.

12. Kit, umfassend die Beschichtungszusammensetzung nach einem der vorhergehenden Ansprüche von 1 bis 9, **dadurch gekennzeichnet, dass** die Bestandteile a), b) und mögliche andere Bestandteile, die sich von c) unterscheiden, ein erstes Element A des Kits bilden, während Bestandteil c) ein zweites Element B des Kits bildet, wobei die beiden Elemente A und B genau in dem Moment vermischt werden, in dem die Beschichtungszusammensetzung verwendet wird.

## Revendications

1. Une formulation de revêtement pour un substrat composé de matériaux cellulosiques ou de bois comprenant:
a. Un liant polyol polyester essentiellement aliphatique saturé, et essentiellement linéaire avec %OH compris entre 0.5 et 3
b. Un ou plusieurs agents matants constitué de microparticules de silice dont le diamètre équivalent médian est compris entre 1 et 20 micron.
c. Un mélange de polyisocyanates aromatiques et aliphatiques et/ou de polyisocyanates mixtes composés d'unités aliphatiques et aromatiques, dans lesquels les unités polyisocyanates ou aromatiques sont **caractérisées en ce que** le rapport en nombre de leurs groupes réactifs isocyanates respectifs est compris entre 1:5 et 4:5 et de préférence entre 3:10 et 6:10.
Dans la dite formulation de revêtement, le nombre total de groupes réactifs isocyanates étant compris entre 1,8 et 4 fois le nombre de groupes réactifs hydroxyle, et de préférence compris entre 2 et 3,5 fois.

2. Un revêtement selon la revendication 1, dans lequel le polyol polyester est présent en quantité comprise entre 50% et 90% en poids, de préférence entre 70% et 90% en poids, du poids sec total de la formulation de revêtement, en excluant de ce poids sec total le poids de la silice matante et le poids des polyisocyanates.

3. Un revêtement selon l'une des revendications précédentes, dans lequel le polyol polyester est formé de diacides linéaires comprenait un nombre d'atomes de carbone entre 6 et 8 et un éther de glycol comprenant un seul groupe éther.

4. Un revêtement selon l'une des revendications précédentes, dans lequel le composant b) est formé d'une ou de plusieurs agents matants choisis parmi des microparticules de silice thermique, de fumée de silice, de silice pyrogénique, de sol gel de silice ou de silice précipitée, dans une quantité qui comprise entre 0,5% et 20% en poids du poids sec total de la formulation de revêtement.

5. Un revêtement selon l'une des revendications précédentes, dans lequel les polyisocyanates sont constitués ou comprennent des oligomères contenant des monomères isocyanates aromatiques ou aliphatiques.

6. Un revêtement selon l'une des revendications précédentes, comprenant également des composés volatils comme des solvants organiques, des cosolvants, des coalescents ou de l'eau, les composants volatils étant présent en quantité de 5% à 90% en poids du poids total de la formulation de revêtement.

7. Un revêtement selon la revendication 6), dans lequel l'eau est présente en quantité de 10% à 80% en poids du poids total de la formulation de revêtement.

8. Un revêtement selon l'une des revendications précédentes, comprenant également un ou plusieurs autres liants ou polymères réticulants ou non réticulants, des pigments, des colorants, des charges organiques ou inorganiques, des dispersants, des agents de surface, des agentes matants organiques ou inorganiques, des modificateurs de rhéologie, des catalyseurs, des stabilisants, des silicones, des cires, des particules de polymères, des absorbeurs d'UV et d'éventuels additifs supplémentaires.

9. Un revêtement selon l'une des revendications précédentes, comprenant au moins un modificateur de tension superficielle siliconé, et de préférence un modificateur de tension superficielle siliconé réactif qui se lie aux autres composants de la formulation de revêtement.

10. L'utilisation de la formulation de revêtement selon l'une des revendications précédentes, comme revêtement appliqué sur un substrat comprenant un matériau cellulosique ou du bois.

11. La méthode de préparation d'une formulation de revêtement à base de la composition de revêtement décrite selon l'une des revendications 1) à 9), dans laquelle
i. La formulation de revêtement est appliquée sur un support, et
ii. La formulation de revêtement filme ou coalesce en formant une pellicule essentiellement continue, et qui réticule par réaction des groupes isocyanates avec les groupes hydroxyle.

12. Un kit comprenant le revêtement décrit selon l'une des revendications de 1) à 9), dans lequel les composants a) et b) et d'éventuels composants supplémentaires, différents de c), constituent un premier élément A du kit, et le composant c) constitue un second élément B du kit, les deux éléments A et B étant mélangés uniquement au moment de l'utilisation du revêtement.
